# EUROPEAN PATENT APPLICATION

(11) **EP 4 570 555 A1**
(43) Date of publication of application: **18.06.2025**
(21) Application number: 24217907.5
(22) Date of filing: 05.12.2024
(51) Int. Cl.: B60K 35/10, B60K 35/21, B60K 35/22

(54) **PARAMETER MANAGEMENT SYSTEM AND WORK VEHICLE**

(30) Priority: 14.12.2023 JP 2023211085
(71) Applicant: Kubota Corporation, Osaka-shi, Osaka 556-8601 (JP)
(72) Inventor: NAGAYAMA, Takashi, SAKAI-SHI, OSAKA, 5900908 (JP); YAMAMOTO, Takumi, SAKAI-SHI, OSAKA, 5900908 (JP)
(74) Representative: Cabinet Beau de Loménie

(57) **Abstract**

A parameter management system includes: a display panel (8B) provided for the work vehicle and configured to display information on a state of the work vehicle; a non-volatile memory (55a) configured to store a plurality of control parameters each for use to control a device provided for the work vehicle; a manual operation member (8a) for use to select a control parameter to be displayed on the display panel; and a changed parameter manager (55b) configured to, in response to an operation of the manual operation member (8a), set a value for a control parameter displayed on the display panel (8B) and write the value into the non-volatile memory (55a).

## Description

### Technical Field

The present invention relates to a parameter management system for managing parameters for devices provided for a work vehicle and to a work vehicle including the parameter management system.

### Background Art

Patent Literature 1 discloses a ride-on mower configured to control its driving wheels on the basis of detection values from potentiometers configured to detect the respective current positions of gear shifters. The mower includes a reference value updating means for performing an updating and storing process, that is, a process of updating and storing, as a reference value (that is, a parameter), the value that a potentiometer provides when the corresponding gear shifter is at a reference position. The updating and storing process starts in response to a predetermined operation of a gear shifter with the mower at rest. For instance, the reference value updating means detects the value that a potentiometer provides when the corresponding gear shifter is at each reference position, that is, its neutral position and maximum speed position, and stores the detected values as respective updated values (updated parameters) for the neutral and maximum speed positions.

### Prior Art Documents

### Patent Documents

Patent Document 1: JP 2018-30435 A

### Disclosure of the Invention

### Problem to be Solved by the Invention

The parameter updating process disclosed in Patent Literature 1 may be handy, as moving a gear shifter to a predetermined position while the mower is at rest starts updating a predetermined parameter. The process is, however, unreliable because it does not allow a maintenance worker to check the actual parameter value. For pre-shipment inspection or maintenance by a serviceperson, the parameter updating process involves connecting a maintenance PC or the like to the control system and displaying on the PC screen a parameter to be actually stored. Such a process, which may be reliable, is troublesome, as it requires a worker to connect a maintenance PC or the like and watch the PC screen.

The above circumstances have led to a demand for a parameter management system that enables a reliable parameter updating process to be performed without the use of an external device such as a maintenance PC or the like and for a work vehicle including such a parameter management system.

### Means for Solving Problem

A parameter management system according to the present invention for a work vehicle includes: a display panel provided for the work vehicle and configured to display information on a state of the work vehicle; a non-volatile memory configured to store a plurality of control parameters each for use to control a device provided for the work vehicle; a manual operation member for use to select a control parameter to be displayed on the display panel; and a changed parameter manager configured to, in response to an operation of the manual operation member, set a value for a control parameter displayed on the display panel and write the value into the non-volatile memory.

The above configuration involves a display panel provided for a work vehicle and configured to display the state of the work vehicle in addition to a control parameter for use to control a device provided for the work vehicle. Operating the manual operation member to select a value for a control parameter causes the display panel to display the value. After a maintenance worker checks whether the control parameter value displayed is appropriate, the maintenance worker operates the manual operation member to set the value for the control parameter and write the value into the non-volatile memory. This configuration allows a person in charge to update the control parameter while checking its value on the display panel without use of an external data processing terminal such as a portable PC. This renders the parameter updating process highly reliable.

The display panel normally displays such information as the vehicle speed, a device temperature, and the battery state. The display control system allows the display panel to be used for the process of updating a control parameter in response to receiving a special signal. The parameter management system may be configured such that the display panel is configured to display a value of the control parameter for the device in a maintenance mode to which the parameter management system transitions from a normal display mode in response to a special operation signal. This configuration allows the display panel to display the value of a control parameter in response to a special operation signal generated in a manner, thereby eliminating the need to take such trouble as connecting an external device.

The process of updating a control parameter should preferably be performed by an expert. The parameter management system may thus be configured such that the special operation signal is generated based on a command hidden from a general user.

The parameter management system controls a device on a work vehicle on the basis of a detection signal from a sensor configured to detect a predetermined state of the device. This means that each control parameter is associated with a detection signal indicative of a predetermined state of the corresponding device. The parameter management system may be configured such that the changed parameter manager updates the value of the control parameter based on a detection signal from a sensor configured to detect at least one predetermined state of the device.

If a maintenance worker performs the parameter updating process for two or more control devices, the parameter management system should preferably allow the operator to easily and reliably switch between the control devices for display on the display panel. The parameter management system may be configured such that the at least one predetermined state includes a plurality of predetermined states including a first predetermined state and a second predetermined state, and in response to a particular operation of the manual operation member, the display panel switches from displaying the first predetermined state to displaying the second predetermined state. Simply performing a particular operation on the manual operation member switches between different screens each displaying a control parameter for a control device as a target of display by the display panel and a target of control parameter update. This facilitates updating a control parameter for each controller device.

The present invention covers not only the parameter management system described above, but also a work vehicle including the parameter management system. The work vehicle enjoys the above-described various benefits of the parameter management system.

### Brief Description of the Drawings

Fig. 1 is a side view of an electric mower in its entirety as an example work vehicle.
Fig. 2 is a plan view of an electric mower in its entirety.
Fig. 3 is a diagram schematically illustrating the motive power system and control system of an electric mower.
Fig. 4 is a diagram schematically illustrating an arrangement of a shift lever sensor group.
Fig. 5 is a diagram schematically illustrating different paths along which each shift lever is shiftable.
Fig. 6 is a plan view of a display panel and an operation panel.
Fig. 7 is a functional block diagram illustrating control function sections of the control system of a work vehicle and a flow of data.
Fig. 8 is diagram illustrating how screens transition on a display panel during a control parameter updating process.

### Best Mode for Carrying out the Invention

Unless otherwise stated, the present specification uses (i) the word "forward" to refer to the front side in the front-back direction (traveling direction) of the vehicle, (ii) the word "backward" to refer to the back side in the front-back direction of the vehicle, (iii) the terms "left-right direction" and "lateral direction" to refer to the transverse direction (width direction) of the vehicle, which is orthogonal to the front-back direction of the vehicle, and (iv) the words "upward" and "downward" to refer to a position in the vertical direction of the vehicle, that is, a height from the ground. The drawings show "F" to indicate "forward", "B" to indicate "backward", "L" to indicate "left", "R" to indicate "right", "U" to indicate "upward", and "D" to indicate "downward".

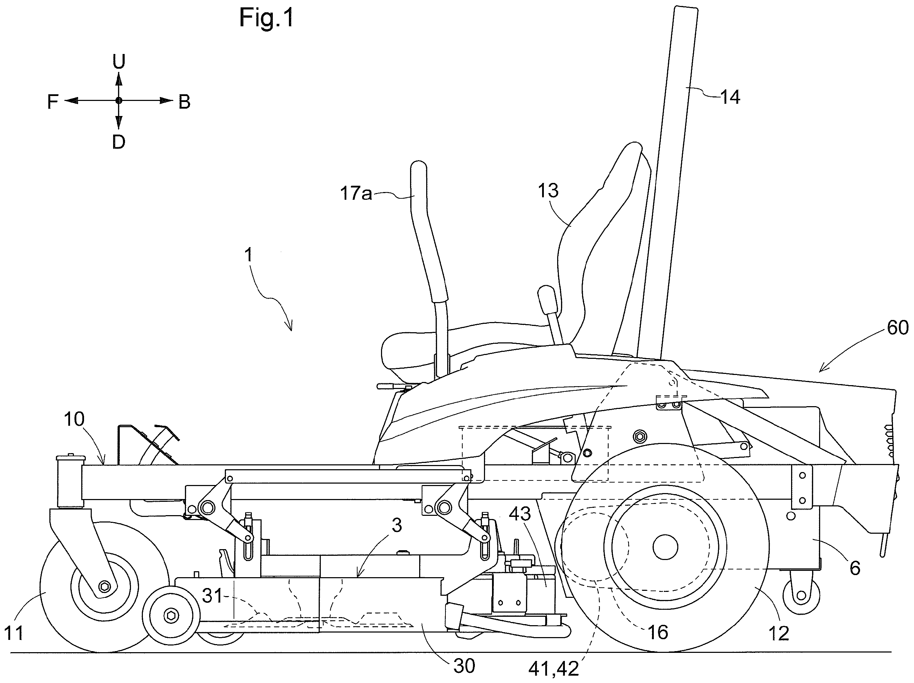

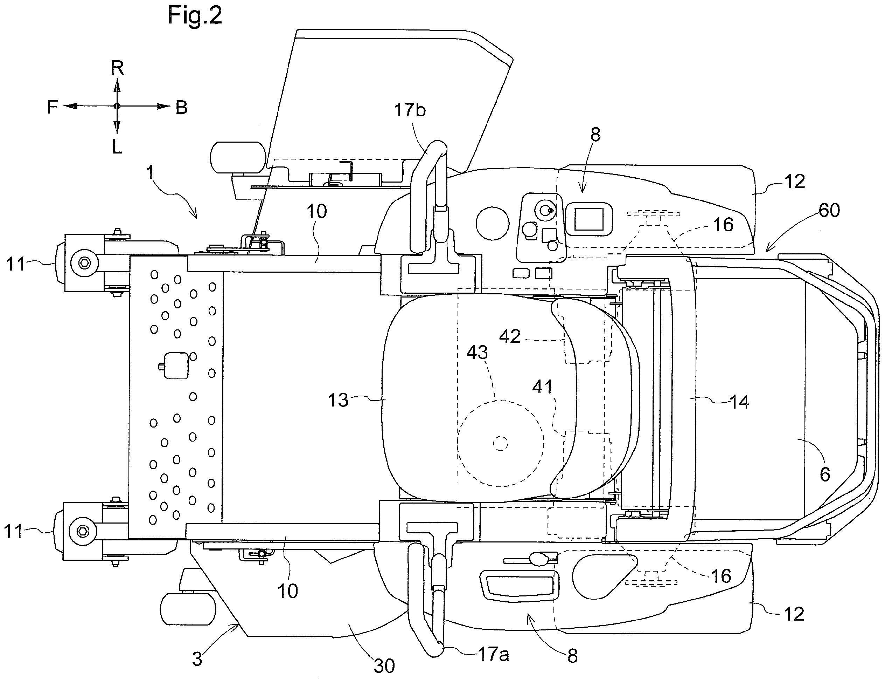

The description below deals with a work vehicle as an embodiment of the present invention, the work vehicle being an electric mower (hereinafter referred to as "work vehicle"). The work vehicle, as illustrated in Figs. 1 and 2, includes a body 1, a pair of left and right front wheels 11, a pair of left and right rear wheels 12, and a mower device 3. The front wheels 11 are held by a front portion of the body 1. The rear wheels 12 (drive wheel unit) are held by a back portion of the body 1. The mower device 3 (work device) is held by a lower portion of the body 1 between the front wheels 11 and the rear wheels 12. The work vehicle also includes a battery 6 and a device container 60 disposed between the left and right rear wheels 12 and containing components such as the battery 6. The body 1 is also provided with components such as a driver's seat 13 and a roll-over protective structure (ROPS) frame 14.

The body 1 includes a frame 10 including a pair of left and right longitudinal beams extending in the front-back direction and a cross beam coupling the two longitudinal beams to each other. The ROPS frame 14 has lower ends coupled to the frame 10.

The front wheels 11 are caster wheels, whereas the rear wheels 12 are drive wheels. The work vehicle includes a left travel motor 41 and a right travel motor 42 (travel electric motor). The left and right travel motors 41 and 42 are disposed inward of the respective rear wheels 12 and configured to transmit motive power to the respective rear wheels 12 through respective deceleration mechanisms 16 to drive the respective rear wheels 12 independently of each other.

As illustrated in Fig. 2, the work vehicle includes a pair of left and right fenders 8 to the left and right of the driver's seat 13. The work vehicle includes a left shift lever 17a (vehicle speed setter) and a right shift lever 17b (vehicle speed setter) to the respective opposite sides of the driver's seat 13 each for use to set a desired vehicle speed. Moving the right shift lever 17b to the neutral position causes the right travel motor 42 to stop. Moving the right shift lever 17b to the forward travel side causes the right travel motor 42 to rotate to the forward travel side. Moving the right shift lever 17b to the backward travel side causes the right travel motor 42 to rotate to the backward travel side. Moving the left shift lever 17a to the neutral position, the forward travel side, or the backward travel side causes the left travel motor 41 to operate similarly to the right travel motor 42. Moving the left and right shift levers 17a and 17b drives the left and right rear wheels 12 independently of each other to the forward or backward travel side, so that the work vehicle moves forward or backward or turns to the right or left.

As illustrated in Fig. 1, the mower device 3 (which is an example work device) includes a mower deck 30 and two or more blades 31 each disposed inside the mower deck 30 and held by the mower deck 30 in such a manner as to be rotatable about a vertical axis. The work vehicle includes a mower motor 43 (which is an example of the "work electric motor") configured to drive the blades 31 (which is an example of the "rotary blade") to rotate and a link mechanism 34 suspending the mower deck 30 from the frame 10 in such a manner that the mower deck 30 is capable of being lifted and lowered.

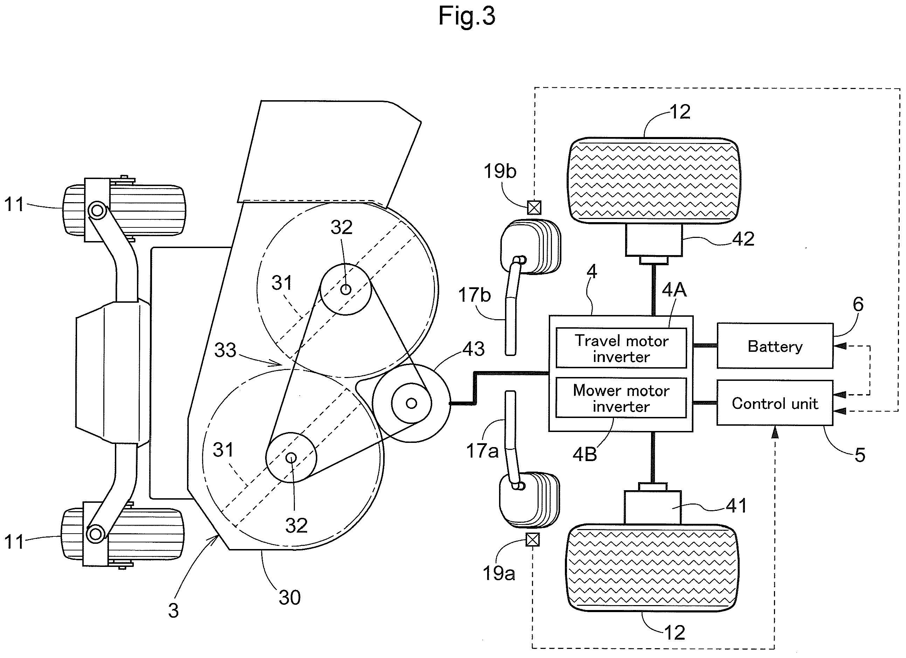

Fig. 3 illustrates the power motive system and control system of the work vehicle. The mower motor 43 is attached to a back wall of the mower deck 30, and configured to rotate, with use of a belt-based power transmission mechanism 33, respective rotary shafts 32 to which the blades 31 are attached. The left travel motor 41 is configured to rotate the left rear wheel 12, whereas the right travel motor 42 is configured to rotate the right rear wheel 12.

The work vehicle includes an inverter unit 4 and a control unit 5. The inverter unit 4 is configured to feed electric power to the left and right travel motors 41 and 42 and the mower motor 43. The inverter unit 4 includes two travel motor inverters 4A configured to feed electric power to the left and right travel motors 41 and 42 and an mower motor inverter 4B configured to feed electric power to the mower motor 43. The inverter unit 4 is drivable on the basis of a control signal from the control unit 5. The inverter unit 4 is connected to the battery 6 as an electric power source.

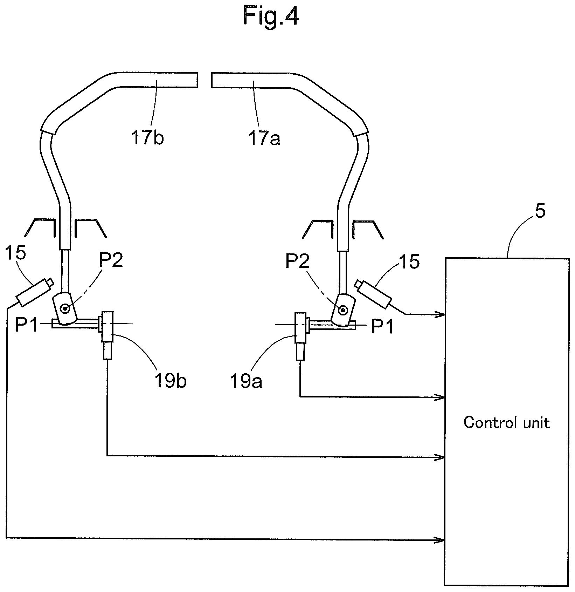

As illustrated in Fig. 4, the left and right shift levers 17a and 17b are each swingable about a first swing axis P1 in the front-back direction of the vehicle (longitudinal shift) and about a second swing axis P2 in the transverse direction of the vehicle (transverse shift).

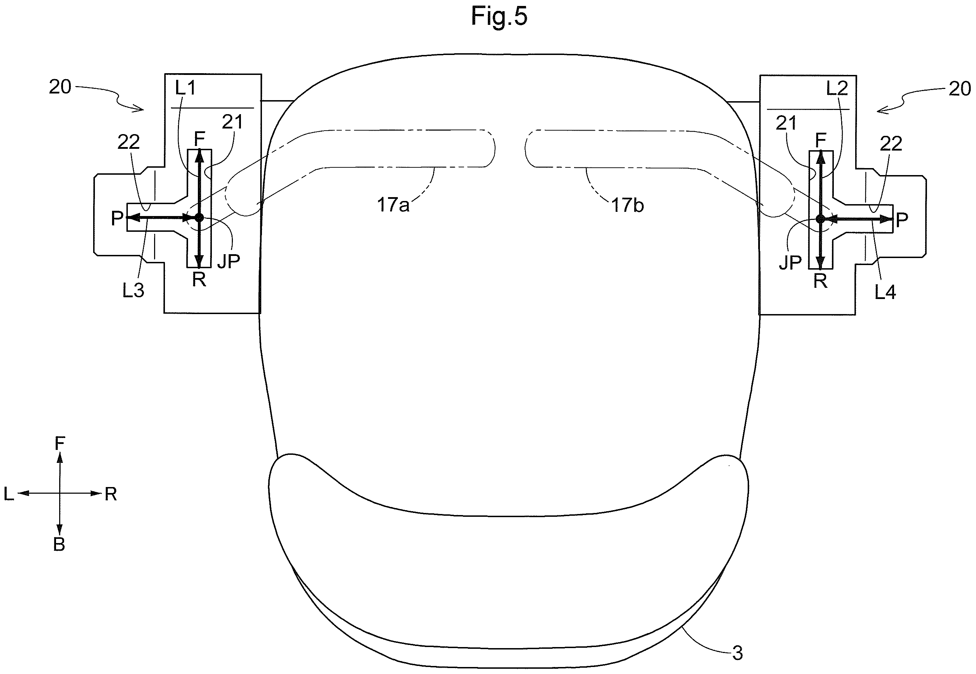

As illustrated in Fig. 5, the work vehicle includes a pair of left and right guide units 20 configured to guide the respective base end portions of the left and right shift levers 17a and 17b for their stable shift (swing). The guide units 20 are each a plate-shaped structure having a longitudinal guide slot 21 and a transverse guide slot 22 in its upper face. The longitudinal guide slot 21 serves to guide the corresponding one of the left and right shift levers 17a and 17b during its longitudinal shift. The transverse guide slot 22 serves to guide the corresponding one of the left and right shift levers 17a and 17b during its transverse shift, and is connected to a central portion of the corresponding longitudinal guide slot 21.

Fig. 5 shows L1 to indicate a first path along which the left shift lever 17a is shiftable longitudinally as guided by the corresponding longitudinal guide slot 21; L2 to indicate a second path along which the right shift lever 17b is shiftable longitudinally as guided by the corresponding longitudinal guide slot 21; L3 to indicate a third path along which the left shift lever 17a is shiftable transversely as guided by the corresponding transverse guide slot 22; L4 to indicate a fourth path along which the right shift lever 17b is shiftable transversely as guided by the corresponding transverse guide slot 22; JP to indicate a junction at which the first path L1 is substantially orthogonally connected to the third path L3 and a junction at which the second path L2 is substantially orthogonally connected to the fourth path L4; F to indicate the forward end (corresponding to the forward-travel maximum speed) of each of the first and second paths L1 and L2; R to indicate the rearward end (corresponding to the rearward-travel maximum speed) of each of the first and second paths L1 and L2; and P to indicate the outward end (corresponding to parking) of each of the third and fourth paths L3 and L4.

As illustrated in Fig. 4, the work vehicle includes a left potentiometer 19a (which is an example of the "detection sensor") disposed near the base end of the left shift lever 17a and configured to detect a longitudinal shift of the left shift lever 17a along the first path L1 (that is, a swing angle thereof about the first swing axis P1). The work vehicle also includes a right potentiometer 19b (which is an example of the "detection sensor") disposed near the base end of the right shift lever 17b and configured to detect a longitudinal shift of the right shift lever 17b along the second path L2 (that is, a swing angle thereof about the first swing axis P1). The work vehicle includes a limit switch 15 disposed near the base end of the left shift lever 17a and configured to detect the left shift lever 17a at a particular position along the third path L3. The work vehicle includes another limit switch 15 near the base end of the right shift lever 17b for a similar detection. As illustrated in Fig. 4, the left and right potentiometers 19a and 19b and the limit switches 15 are connected to the control unit 5 as a shift lever sensor group and each configured to transmit its detection signal to the control unit 5.

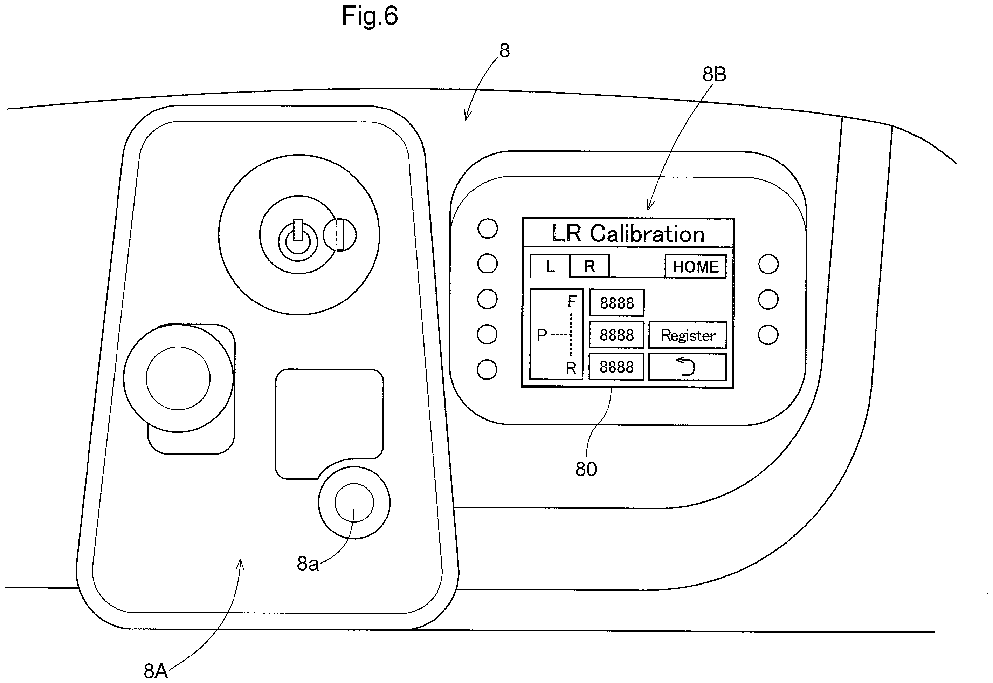

As illustrated in Fig. 6, the right fender 8 is provided with an operation panel 8A and a display panel 8B. The display panel 8B includes a liquid crystal display 80 configured to selectively display various items of information and a group of indicator lamps disposed to the opposite lateral sides of the liquid crystal display 80 and configured to indicate various vehicle states. The operation panel 8A includes a group of operable devices such as a switch and a dial each for use to operate an operation device mounted on the work vehicle. The group of operable devices include a manual operation member 8a for use to select information to be displayed on the liquid crystal display 80 and a driving mode for the work vehicle.

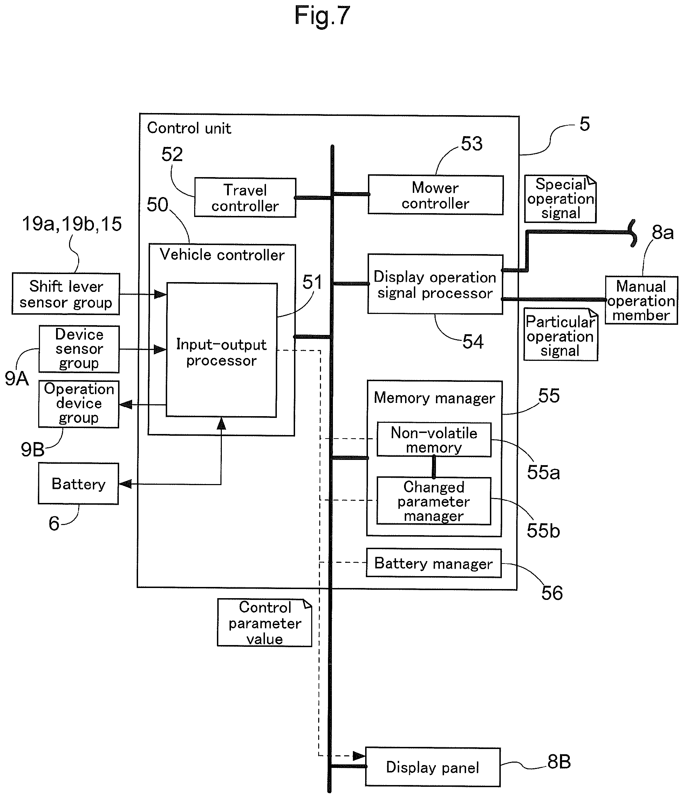

The work vehicle includes a control unit 5 including, as illustrated in Fig. 7, such control function sections as a vehicle controller 50, a travel controller 52, a mower controller 53, a display operation signal processor 54, a memory manager 55, and a battery manager 56.

The vehicle controller 50 is configured to control in-vehicle devices on the basis of the state of the work vehicle. The vehicle controller 50 includes an input-output processor 51 connected to such components as a device sensor group 9A configured to detect various states of the work vehicle and an operation device group 9B including various operation devices mounted on the work vehicle. The input-output processor 51 is also connected to the left and right potentiometers 19a and 19b and the limit switches 15 as a shift lever sensor group, which are technically included in the device sensor group 9A but are shown in Fig. 7 as separate therefrom for ease of understanding of the control parameter update process described later. The input-output processor 51 is configured to receive a sensor signal, convert the sensor signal as necessary, and transmit the resulting signal to an appropriate control function section.

The travel controller 52 is configured to generate a motor control signal on the basis of a signal from a control function section cooperating with the travel controller 52 and drive the travel motor inverters 4A to control how the left and right travel motors 41 and 42 are driven independently of each other. One of the travel motor inverters 4A is for the left travel motor 41, whereas the other is for the right travel motor 42. The mower controller 53 is configured to generate a motor control signal on the basis of a signal from a control function section cooperating with the mower controller 53 and drive the mower motor inverter 4B to control how the mower motor 43 is driven.

The display operation signal processor 54 is configured to receive an operation signal, generate an internal instruction on the basis of the operation signal, and transmit the internal instruction to an appropriate control function section. The operation signal is one from any of various operation members (for example, the manual operation member 8a) for use to operate information on the display panel 8B, or one from another operation member. The former is, for example, a particular operation signal, whereas the latter is, for example, a special operation signal.

The memory manager 55 includes a non-volatile memory 55a and a changed parameter manager 55b, and is configured to write into the non-volatile memory 55a a control parameter (which is an example of the "plurality of control parameters") for use to control a device provided for the work vehicle, read such a control parameter from the non-volatile memory 55a, and update such a control parameter in the non-volatile memory 55a. The changed parameter manager 55b is configured to, in response to an operation of the manual operation member 8a to set a value for a control parameter on the display panel 8B, renew the control parameter in the non-volatile memory 55a with the set value.

The control unit 5 causes the vehicle controller 50, the display operation signal processor 54, the memory manager 55, the battery manager 56, and the display panel 8B to operate appropriately to manage respective processes of displaying and updating control parameters. Fig. 7 shows a dashed line to indicate a flow of data on a control parameter value during such processes. The display panel 8B displays the value of a control parameter read from the non-volatile memory 55a as the memory value of the control parameter for a device selected through an operation of the manual operation member 8a. The input-output processor 51 obtains data on the value of the control parameter for a reference position for the selected device, and transmits the data to the display panel 8B, which then displays the value as the real value of the control parameter. The changed parameter manager 55b transmits data on an updated value of the control parameter to the display panel 8B, which then displays the updated value. This configuration reduces the amount of data transmitted through a data communication line (for example, an in-vehicle LAN) between the display panel 8B and the control unit 5, with the result of a reduced communication load. The battery manager 56 forms a battery management system (BMS) together with the battery 6 (specifically, a battery-side battery manager).

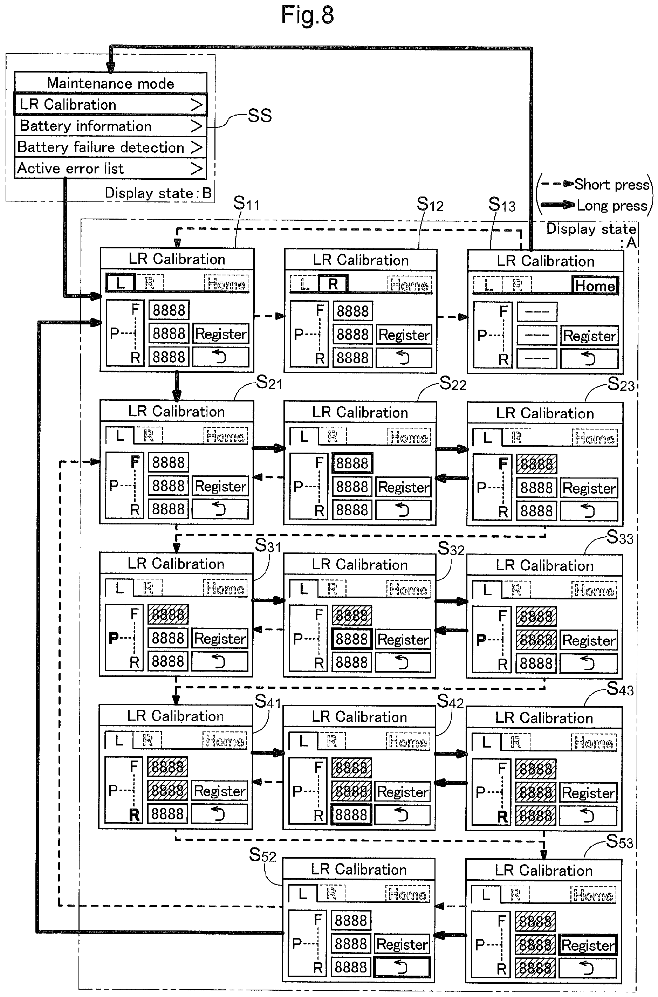

Fig. 8 illustrates how a screen on the display panel 8B transitions during a control parameter updating process managed by the control unit 5. Fig. 8 illustrates at the top a starting screen SS for the control parameter updating process. The starting screen indicates a maintenance mode and has a display state B. Fig. 8 illustrates a group of screens that the liquid crystal display 80 displays in the maintenance mode. The starting screen SS allows a start of work basically limited to a maintenance worker: A screen in a normal display mode transitions to the screen in the maintenance mode on the basis of a special operation signal generated by a special operation performed with use of an operation member, in other words, on the basis of a hidden command, that is, a command hidden from the general user.

The present embodiment is configured such that the starting screen SS in the maintenance mode transitions (as illustrated in Fig. 8) on the basis of a particular operation signal generated in response to an operation of the manual operation member 8a, which is adjacent to the display panel 8B. Long-pressing and short-pressing the manual operation member 8a generate respective particular operation signals different from each other. Fig. 8 illustrates a transition diagram that shows arrows with extra thick lines to each indicate a transition initiated by a long press and arrows with perforated lines to each indicate a transition initiated by a short press.

Long-pressing the manual operation member 8a with item "LR Calibration" selected on the starting screen SS causes the current screen to transition from the display state B to a display state A. Fig. 8 shows a group of screens in a 3-by-5 matrix with a blank in the bottom left corner, the screens being selectively displayable in the display state A. The description below uses the symbol Sij (where i = 1, 2, 3, 4, or 5; and j = 1, 2, or 3) as in a matrix expression for identification of each screen, with S51 corresponding to the blank.

The screens Sij in the display state A are for LR calibration, which refers to calibration of the left and right shift levers 17a and 17b, that is, calibration of the left and right potentiometers 19a and 19b (see Fig. 4) for their respective parameters. Specifically, LR calibration refers to calibrating each potentiometer (namely, the left and right potentiometers 19a and 19b) at predetermined positions (for example, at F, R, and P) on the basis of detection values of a control parameter. The positions F, R, and P each correspond to a predetermined state of each of the left and right shift levers 17a and 17b. The screens Sij each show, for example, numerical values registered in the non-volatile memory 55a, detection values (that is, raw data) from a potentiometer, or values for tentative registration in the non-volatile memory 55a. This calibration serves to correct, for example, an error caused during the production or attachment of the potentiometer or an error caused by a change over time.

The screens Sij each show "L" to indicate the left shift lever 17a; "R" to indicate the right shift lever 17b; "Home" for the home screen; "F" and "R" (different from "R" for the right shift lever 17b), and "P" to each indicate a predetermined position of the corresponding potentiometer; three four-digit numbers to each indicate a control parameter value (that is, a detection value) from the potentiometer at the corresponding predetermined position; "Register" for registering (or writing) information; and a return sign.

Transition from the display state B to the display state A causes the liquid crystal display 80 to display a screen S11 as the top screen for LR calibration. The screen S11 shows L as highlighted to indicate calibration of the left shift lever 17a. Short-pressing the manual operation member 8a with the screen S11 displayed causes the screen S11 to transition to a screen S12, which shows R as highlighted to indicate calibration of the right shift lever 17b. Short-pressing the manual operation member 8a with the screen S12 displayed causes the screen S12 to transition to a screen S13, which is the home screen, with "Home" highlighted. Short-pressing the manual operation member 8a with the screen S13 displayed causes the screen S13 to transition back to the screen S11. Long-pressing the manual operation member 8a with the screen S13 displayed causes the screen S13 to return to the starting screen SS. Long-pressing the manual operation member 8a with the screen S11 displayed causes the screen S11 to transition to a screen S21.

The screen S21 is for calibration of the left shift lever 17a at the F position, with "F" highlighted. The calibration requires the maintenance worker to move the left shift lever 17a to the F position. The screen S21 shows, as control parameter values, memory values read from the non-volatile memory 55a. Long-pressing the manual operation member 8a with the screen S21 displayed causes the screen S21 to transition to a screen S22, which highlights, as a control parameter value from the left shift lever 17a at the F position, the real value that the input-output processor 51 has obtained. This allows the maintenance worker to check the real control parameter value. Long-pressing the manual operation member 8a with the screen S22 displayed causes the screen S22 to transition to a screen S23 with "F" highlighted and finishes the calibration of the left shift lever 17a at the F position, causing the changed parameter manager 55b to tentatively register the control parameter value. The screen S23 shows an updated control parameter value (as hatched in Fig. 8).

Long-pressing the manual operation member 8a with the screen S23 displayed causes the screen S23 to transition back to the screen S22. Short-pressing the manual operation member 8a with the screen S22 displayed causes the screen S22 to transition to back the screen S21. Short-pressing the manual operation member 8a with the screen S21 or S23 displayed causes the screen S21 or S23 to transition to a screen S31.

The screen S31 is for calibration of the left shift lever 17a at the P position, with "P" highlighted. The calibration requires the maintenance worker to move the left shift lever 17a to the P position. The screen S21 shows, as control parameter values, memory values read from the non-volatile memory 55a. Long-pressing the manual operation member 8a with the screen S31 displayed causes the screen S31 to transition to a screen S32. which highlights, as a control parameter value for the left shift lever 17a at the P position, the real value that the input-output processor 51 has obtained. This allows the maintenance worker to check the real control parameter value. Long-pressing the manual operation member 8a with the screen S32 displayed causes the screen S32 to transition to a screen S33 with "P" highlighted and finishes the calibration of the left shift lever 17a at the P position, causing the changed parameter manager 55b to tentatively register the control parameter value. The screen S33 shows an updated control parameter value (as hatched in Fig. 8).

Long-pressing the manual operation member 8a with the screen S33 displayed causes the screen S33 to transition back to the screen S32. Short-pressing the manual operation member 8a with the screen S32 displayed causes the screen S32 to transition to back the screen S31. Short-pressing the manual operation member 8a with the screen S31 or S33 displayed causes the screen S31 or S33 to transition to a screen S41.

The screen S41 is for calibration of the left shift lever 17a at the R position, with "R" highlighted. The calibration requires the maintenance worker to move the left shift lever 17a to the R position. The screen S21 shows, as control parameter values, memory values read from the non-volatile memory 55a. Long-pressing the manual operation member 8a with the screen S41 displayed causes the screen S41 to transition to a screen S42, which highlights, as a control parameter value from the left shift lever 17a at the R position, the real value that the input-output processor 51 has obtained. This allows the maintenance worker to check the real control parameter value. Long-pressing the manual operation member 8a with the screen S42 displayed causes the screen S42 to transition to a screen S43 with "R" highlighted and finishes the calibration of the left shift lever 17a at the R position, causing the changed parameter manager 55b to tentatively register the control parameter value. The screen S43 shows an updated control parameter value (as hatched in Fig. 8).

Long-pressing the manual operation member 8a with the screen S43 displayed causes the screen S43 to transition back to the screen S42. Short-pressing the manual operation member 8a with the screen S42 displayed causes the screen S42 to transition to back the screen S41. Short-pressing the manual operation member 8a with the screen S41 or S43 displayed causes the screen S41 or S43 to transition to a screen S53.

The screen S53 is for registration (update) of a control parameter, with "Register" highlighted. Long-pressing the manual operation member 8a with the screen S53 displayed causes the changed parameter manager 55b to write the tentatively registered control parameter values into the non-volatile memory 55a of the memory manager 55, and also causes the screen S53 to transition to a screen S52. Short-pressing the manual operation member 8a with the screen S53 displayed simply causes the screen S53 to transition to the screen S52 without causing the changed parameter manager 55b to write the tentatively registered control parameter values into the non-volatile memory 55a.

The screen S52 indicates an intermediate end, with the return sign highlighted. Long-pressing the manual operation member 8a with the screen S52 displayed causes the screen S52 to return to the screen S11. Short-pressing the manual operation member 8a with the screen S52 displayed causes the screen S52 to return to the screen S21.

Fig. 8 shows hatching over the four-digit control parameter value (detection value) for each potentiometer at each predetermined position in the screens Sij to indicate that the value has been tentatively registered as an updated value.

The process described above with reference to Fig. 8 is for calibration of the left shift lever 17a for its control parameters. A similar process applies to calibration of the right shift lever 17b for its control parameters.

### Alternative Embodiments

(1) The embodiment described above is an electric mower as a work vehicle. The present invention is also applicable to, for example, mowers drivable by an internal combustion engine, work vehicles other than mowers such as agricultural work vehicles, earthmoving work vehicles, and construction work vehicles, and utility vehicles.
(2) The embodiment described above is configured to display control parameters of the respective potentiometers for the left and right shift levers 17a and 17b. The present invention may alternatively be configured to display control parameters for detectors for other devices such as a lifter and an accelerator pedal.
(3) The embodiment described above is configured such that long-pressing and short-pressing the manual operation member 8a generates respective particular operation signals different from each other. The work vehicle may alternatively include two or more operable members to generate different particular operation signals. The work vehicle may further alternatively allow the maintenance worker to perform a single type of operation on a single operation member if the screen transition is in sequence with no selectable options.
(4) Fig. 7 shows rectangles each indicative of respective functional blocks. The arrangement of the functional blocks is merely for the purpose of description: Two or more separate functional blocks may be combined into a single functional block, whereas a single functional block may be divided into two or more separate functional blocks.

The arrangements disclosed for the above embodiments (including the alternative embodiments; hereinafter the same applies) may each be combined with an arrangement disclosed for another embodiment, as long as such a combination does not cause a contradiction. Further, the embodiments disclosed in the present specification are mere examples. The present invention is not limited to those embodiments, and may be altered as appropriate, as long as such an alteration does not result in a failure to attain an object of the present invention.

### Industrial Applicability

The present invention relates to a parameter management system for managing control parameters for use to control devices provided for a work vehicle and to various work vehicles including the parameter management system.

## Claims

1. A parameter management system for a work vehicle,
the parameter management system comprising:
a display panel (8B) provided for the work vehicle and configured to display information on a state of the work vehicle;
a non-volatile memory (55a) configured to store a plurality of control parameters each for use to control a device provided for the work vehicle;
a manual operation member (8a) for use to select a control parameter to be displayed on the display panel; and
a changed parameter manager (55b) configured to, in response to an operation of the manual operation member (8a), set a value for a control parameter displayed on the display panel (8B) and write the value into the non-volatile memory (55a).

2. The parameter management system according to claim 1, wherein
the display panel (8B) is configured to display a value of the control parameter for the device in a maintenance mode to which the parameter management system transitions from a normal display mode in response to a special operation signal.

3. The parameter management system according to claim 2, wherein
the special operation signal is generated based on a command hidden from a general user.

4. The parameter management system according to any of claims 1 to 3, wherein
the changed parameter manager (55b) updates the value of the control parameter based on a detection signal from a sensor (9A) configured to detect at least one predetermined state of the device.

5. The parameter management system according to claim 4, wherein
the at least one predetermined state includes a plurality of predetermined states including a first predetermined state and a second predetermined state, and
in response to a particular operation of the manual operation member (8a), the display panel (8B) switches from displaying the first predetermined state to displaying the second predetermined state.

6. A work vehicle, comprising:
a parameter management system according to any one of claims 1 to 5.
